# EUROPEAN PATENT APPLICATION

(11) **EP 2 995 942 A1**
(43) Date of publication of application: **16.03.2016**
(21) Application number: 14184246.8
(22) Date of filing: 10.09.2014
(51) Int. Cl.: G01N 29/04, G01N 29/07, G01N 29/38, G01N 29/44, G01N 29/46

(54) **A pipe fault detection system**

(71) Applicant: Shell Internationale Research Maatschappij B.V., 2596 HR Den Haag (NL)
(72) Inventor: Golombok, Michael Zvi, 2288GS Rijwijk (NL); Vogelaar, Bouko Barteld Syzte Adriaan, 5612 AZ Eindhoven (NL)
(74) Representative: Matthezing, Robert Maarten

(57) **Abstract**

The invention provides a pipe fault detection system for detecting a fault in a pipe. The system comprises an emitting transducer that generates an incident wave in a wall of a pipe, and a receiving transducer that transduces waves received in the receiving transducer. A reflection coefficient determined from the amplitudes of the direct wave and of a reflected wave is compared to a threshold value to detect a fault in the pipe.

## Description

### Field of the Invention

The present invention relates to a pipe fault detection system, a pipe fault detection apparatus, a method for detecting a fault in a pipe, a computer program, and a non-transitory tangible computer readable storage medium.

### Background of the Invention

Pipelines in the (petro-)chemical industry suffer from wear that cannot readily be detected from internal or external structural health measurements. Investigating wear often requires that the pipe be taken out of service i.e. flow must be stopped. The pipe then needs to have its external wall exposed so that some measuring device can sample its condition every few meters.

In the art attempts have been made address this problem. For example, United States Patent application 20140028154 discloses a known system for monitoring a pipe with a guided wave probe.

The guided wave probe includes an electromechanical device for inducing guided waves. The waves reflect off an end of the pipe. The reflected waves that impinge on a measurement surface are detected by an electromechanical sensor and converted into voltage changes.

Guided wave probe instrumentation analyzes the voltage changes to draw inferences from attenuation of the waves. Corrosion, for example, may increase the attenuation of the reflected waves.

It is a problem of the known system that it has limited accuracy and range. Moreover, it is a problem of the known system that attenuation of detected reflected waves may vary for different reasons than pipe faults, e.g., a reduced bonding between the measurement surface and the pipe. Such systems require continual calibration and re-calibration.

### Summary of the invention

Accordingly, the present invention provides a pipe fault detection system for detecting a fault in a pipe, the pipe comprising a torsional wave reflecting feature. The system comprises
- an emitting transducer (132) coupled to a wall (112) of the pipe, and a receiving transducer (134) coupled to the wall of the pipe,
- the emitting transducer being arranged to emit a incident wave (141) in the wall of the pipe, propagating along and through the thickness of the wall towards the receiving transducer, the incident wave having at least a torsional component,
- the receiving transducer being arranged to transduce at least torsional waves received in the receiving transducer into an electric signal (135), the electric signal representing a direct wave and a reflected wave, the direct wave being a portion of the incident wave arriving at the receiving transducer, the direct wave arriving directly from the emitting transducer and the reflected wave being obtained from a transmitted wave reflected off the reflecting feature, the transmitted wave being a portion of the incident wave transmitted beyond the receiving transducer

- an amplitude determination unit (152) arranged to determine an amplitude of the reflected wave in the electric signal and an amplitude of the direct wave in the electric signal,
- a reflection coefficient unit (153) arranged to compute a reflection coefficient from the amplitude of the reflected wave and the amplitude of the direct wave, and
- a fault determination unit (154) arranged to determine a fault when the reflection coefficient crosses a threshold value.

The inventors found that the value of the reflection coefficient varies with the extent of the damage in the pipe. By causing a wave to pass over the damage, information over the extent of the damage is obtained. The reflection coefficient compares an amplitude of the reflected wave with an amplitude of the direct wave within a single time trace and is thus self calibrating. This internal comparison reduces experimental error.

Torsional waves are equally sensitive to internal or external defects at any circumferential location. This indicates that defects will be detectable anywhere in the cross section of the pipe. Accordingly, a low number of transducers is needed to detect faults.

In an embodiment, the pipe fault detection system comprises a fault localization unit.

The fault localization unit arranged to
- determine a further reflection in the electric signal, the further reflection representing the transmitted wave reflected off the fault,
- determine a time difference between the arrival of the further reflection at the receiving transducer and the arrival of the direct wave at the receiving transducer, or between the arrival of the further reflection at the receiving transducer and the emitting of the incident wave,
- determine an axial location of the fault in the pipe from the time difference and the torsional wave velocity.

The locational ability is important in practical applications, as it allows focused investigation and/or repair of the pipe in case damage has been detected.

An aspect of the invention concerns a method for detecting pipe faults. A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer.

In a preferred embodiment, the computer program comprises computer program code means adapted to perform all the steps of a method according to the invention when the computer program is run on a computer. Preferably, the computer program is embodied on a computer readable medium.

### Brief description of the drawings

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,
Figure 1 schematically shows an example of an embodiment of a pipe fault detection system,
Figures 2a-2e schematically show examples of cross-sections in an embodiment of a pipe,
Figure 3a schematically shows amplitude in the time domain of a 75x2.5 mm undamaged pipe,
Figure 3b schematically shows amplitude in the time domain of a 75x2.5 mm damaged pipe,
Figure 3c schematically shows amplitude in the spectral domain of a 75x2.5 mm undamaged pipe,
Figure 3d schematically shows amplitude in the spectral domain of a 75x2.5 mm damaged pipe,
Figure 3e is a copy of figure 3a in which schematically windows are indicated,
Figure 3f schematically shows an example of variation of the reflection coefficient from a reference reflecting feature with respect to wear,
Figure 3g schematically shows an example of variation of the reflection coefficient from the fault as a function of wear for the 75 mm pipe,
Figure 4a schematically shows an example of a phase velocity dispersion image for a direct wave in an embodiment of a pipe,
Figure 4b schematically shows an example of a phase velocity dispersion image for a reflected wave from an axisymmetric end in an embodiment of a pipe,
Figure 5a schematically shows an example of a method for detecting a fault in a pipe,
Figure 55 schematically shows an example of a method for determining a further reflection,

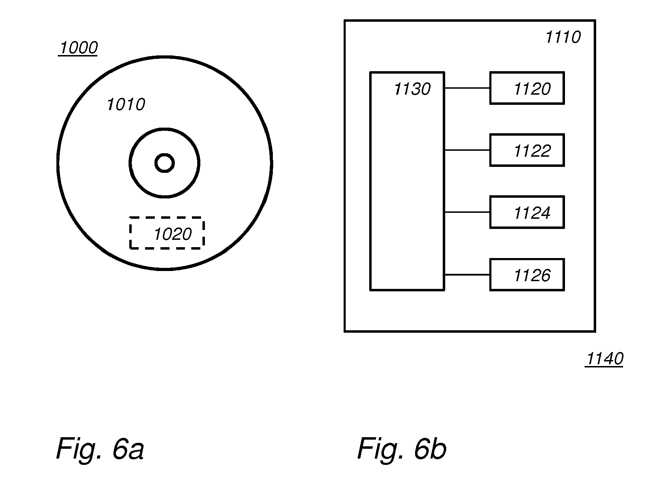

Figure 6a shows a computer readable medium having a writable part comprising a computer program according to an embodiment,
Figure 6b shows a schematic representation of a processor system according to an embodiment.

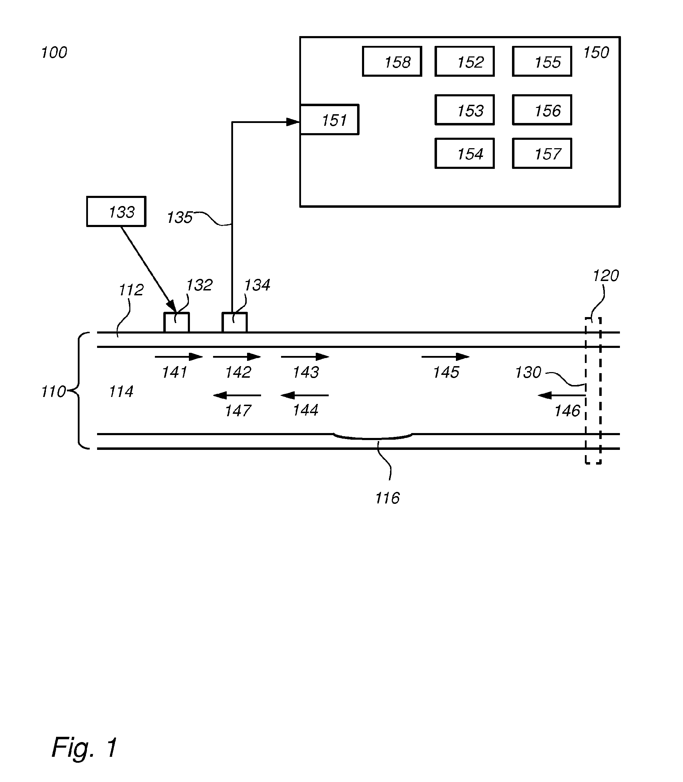

### List of Reference Numerals in figures 1-4:

- 100: a pipe fault detection system
- 110: a pipe
- 112: a pipe wall
- 114: a pipe interior
- 116: a pipe fault
- 120: a reflecting feature
- 132: a emitting transducer
- 133: a waveform generator
- 134: a receiving transducer
- 135: an electric signal
- 141: an incident wave
- 142: a direct wave
- 143, 145: a transmitted wave
- 144: a reflected wave off a fault
- 146: a reflected wave off a reflecting feature
- 147: a reflected wave
- 150: a pipe fault detection apparatus
- 151: an interface arranged to receive the electric signal
- 152: an amplitude determination unit
- 153: a reflection coefficient unit
- 154: a fault determination unit
- 155: a fault localization unit
- 156: a frequency domain transformer
- 157: a reflection coefficient memory
- 158: a filter unit
- 410: direct arrival
- 412: reflected arrival
- 420: amplitude spectrum direct arrival
- 423: amplitude spectrum reflected arrival
- 401: a direct wave window
- 402: a reflected wave window

### Detailed description of the invention

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

In the following, for sake of understanding, the circuitry is described in operation. However, it will be apparent that the respective elements are arranged to perform the functions being described as performed by them.

Figure 1 schematically shows an example of an embodiment of a pipe fault detection system 100 for detecting a fault 116 in a pipe 110.

For example, the pipe may be a metal pipe, e.g. an oil pipe. Pipe 110 has a pipe wall 112, which may be made of metal. For example, the pipe may be used for transporting a fluid through a pipe interior 114, in particular a liquid such as oil. The fault 116 may be pipe thinning, e.g., caused by corrosion in the pipe. Pipe thinning is problematic as it may later lead to leaks in the pipe. Pipe 110 is illustrated as an intersection along a longitudinal axis.

Pipe 110 comprises a torsional wave reflecting feature 120. Waves propagating in pipe wall 112 may have a torsional, a flexural, and a longitudinal wave component. Feature 120 is arranged to reflect a wave propagating in the wall 112, which wave has at least a torsional component. Many known pipes, in particular fluid transporting pipes, have features that reflect torsional waves, at least to some extent. For example any of the following have torsional wave reflecting properties: a pipe end, a joint between a pipe and a further pipe, a weld, a flange. In an embodiment, an external ring, say an outside rib, is applied to pipe 110 as reflecting feature to improve torsional reflections. In an embodiment, the torsional wave reflecting feature 120 is axially symmetric. Although the latter is not strictly necessary it simplifies the response pattern of reflected waves. In most embodiments, reflecting feature 120 will not be purely torsional. Ideally, the torsional wave reflecting feature 120 reflects only a torsional wave component of the direct wave impinging on feature 120, and absorbs the flexural or longitudinal wave components. However, this is not a requirement. In practice, the axial nature of the pipe ensures that only T(0,1) survives. Furthermore, signal processing may be used to filter out the flexural or longitudinal wave components.

Also fault 116 will reflect the emitted wave, although typically to a lesser extent than the reflecting feature 120.

Pipe fault detection system 100 comprises an emitting transducer 132, and a receiving transducer 134; both are coupled to wall 112 of pipe 110. In the embodiment shown in figure 1, the emitting transducer and the receiving transducer are applied to an external surface of the pipe. The latter is not necessary but has the advantage that the transducers are not in contact with a fluid transported in pipe 110 and easy accessible. Alternatively, the generating and/or receiving transducer is located on an interior surface of the pipe. Generating and/or receiving transducer may also be integrated with the pipe wall 112.

Emitting transducer 132 is arranged to emit to emit an incident wave 141 in the wall of the pipe propagating along the wall towards the receiving transducer. The incident wave has at least a torsional component; for example a shear wave transducer may be used. In an embodiment, the pipe fault detection system comprises a waveform generator 133 electronically coupled to the emitting transducer 132. The wave form may have multiple frequency components, but has at least a frequency component of an excitation frequency. For example, the wave form may be single tone of the excitation frequency. For example, the wave form may be one or more sine waves.

The receiving transducer 134 is arranged to transduce at least torsional waves received in the receiving transducer into an electric signal 135. Electric signal 135 represents the direct wave 142 and the reflected wave 147. At the receiving transducer 134 the direct wave 142 arrives directly from the incident wave 141 from the emitting transducer and a reflected wave 147 is obtained from the transmitted wave 143 reflected off a reflecting feature 120 and/or fault 116. Receiving transducer 134 may also transduce flexural or longitudinal waves, these may be filtered out later, e.g., digitally.
To improve sensitivity to torsional waves, the emitting transducer and/or the receiving transducer may be shear transducers, arranged to generate and/or receive a shear wave in the wall of the pipe. For example, the receiving transducer may be placed to be sensitive to tangential displacement in circumferential direction.

In an embodiment, the shear transducer of the emitting transducer produces tangential displacement, so that both torsional and flexural modes are generated.

The emitting transducer 132 and the receiving transducer 134 may be two axially spaced dry-coupled piezoelectric sensors. Instead of dry coupling, the transducer may also be bounded by e.g. glue, paint, epoxy resin, wax, cement bond, coupling agents, and/or taped, wrapped, screwed in, mounted by magnets, clamps, studs, shoes and alike.

In an embodiment, the fault is located between the receiving transducer and the reflecting feature. In the configuration shown in figure 1, the reflecting feature is located at the pipe wall on a remote side of the fault, in the axial direction; in figure 1 on the right of the fault. The generating and receiving transducer are located on a near side of the fault; in the view shown on the left of the fault. The second side is opposite the first side in the axial direction, so that the remote side and the near side are separated by the fault.

In operation, an incident wave 141 is emitted at the emitting transducer 132. The incident wave passes first the receiving transducer 134. Part of the of the incident wave arriving at the receiving transducer is absorbed by the receiving transducer 134 where it is detected as a direct wave 142. The incident wave 141 continuous to propagate in pipe wall 112 as a transmitted wave 143 until it reaches the fault at 116, where it is partly reflected as a reflected wave 144 off the fault 116 and partly transmitted through the fault as a transmitted wave 145, and reaches the torsional reflecting feature 120. The transmitted wave 145 is reflected at the reflecting feature forming the reflected wave 146, the reflected wave reaches the fault at 116, partly passes it to reach the receiving transducer 134, where it is detected as a reflected wave 147.

The emitting transducer and the receiving transducer may be placed close together; in an embodiment the emitting transducer and the receiving transducer are axially spaced by approximately one wavelength of the torsional wave. In an embodiment, the emitting transducer and the receiving transducer are axially spaced by 20 cm. The emitting transducer and the receiving transducer may also be integrated in a single transducer.

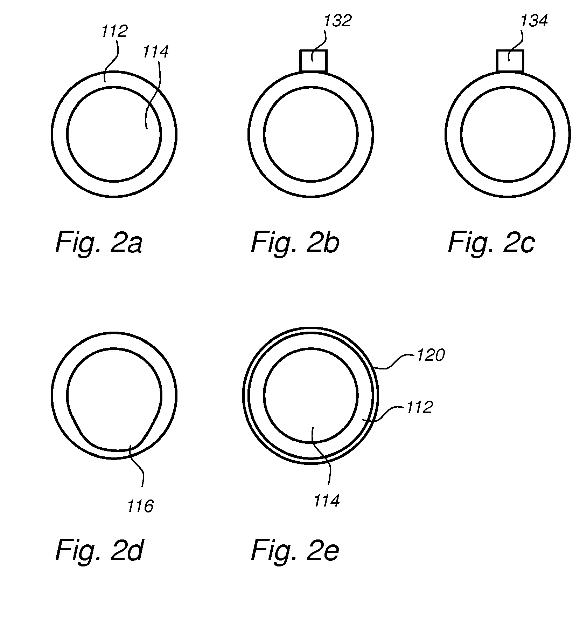

Figures 2a-2e schematically show examples of cross-sections at different points in an embodiment of pipe 110. The cross sections are perpendicular to the axial direction of pipe 110, and are taken at different points of interest.

Figure 2a is taken at the redundant side of emitting transducer 132, i.e., at the side of emitting transducer 132 facing away from receiving transducer 134. Figure 2b is taken at the emitting transducer. Figure 2c is taken at the receiving transducer 134. Figure 2d is taken at fault 116 and schematically shows pipe thinning at 116. Figure 2e is taken at torsional reflecting feature 120. Feature 120 in this embodiment is a rib applied to the external wall surface of pipe 110.

Returning to figure 1. Pipe fault detection system 100 further comprises an amplitude determination unit 152, a reflection coefficient unit 153, and a fault determination unit 154. In the embodiment, illustrated in figure 1, these have been combined into a pipe fault detection apparatus 150. The latter is not necessary; for example these units may well be distributed, e.g., connected through a computer network, say a LAN network, or the Internet. Pipe fault detection apparatus 150 may comprise an interface 151 arranged to receive the electric signal.

Waveform generator 133 may be included in apparatus 150; Waveform generator 133 may be integrated with emitting transducer 132. Waveform generator 133 may also be separate from apparatus 150; For example, waveform generator 133 may be located relatively close to pipe 110, whereas apparatus 150 may be located at a geographically different location than pipe 110 and/or waveform generator 133. Waveform generator 133 may be connected to emitting transducer 132 in a number of ways, e.g., wireless or wired.

The amplitude determination unit 152 is arranged to determine an amplitude of the reflected wave in the electric signal and an amplitude of the direct wave in the electric signal.

The reflection coefficient unit 153 is arranged to compute a reflection coefficient from the amplitude of the reflected wave and the amplitude of the direct wave.

The fault determination unit 154 is arranged to determine a fault when the reflection coefficient crosses a threshold value.

It was found that the measurement of the amplitude of the direct or reflected wave individually varied too much to be a reliable indication of wear in the pipe. However, by computing a reflection coefficient from within a single time trace, a more reliable indicator is obtained which reduces experimental errors. For example, loosening of the sensors, e.g. due to vibrations in the pipe influences their measurements. However, the reflection coefficient is much less influenced, because it is internally normalized.

In an embodiment, reflection coefficient unit 153 is arranged so that the reflection coefficient rises with increasing pipe damage, e.g., increasing pipe thinning. In this case, the fault determination unit 154 is arranged to determine a fault when the reflection coefficient exceeds a threshold value. In another embodiment, the reflection coefficient decreases with increasing pipe damage. In this case, the fault determination unit 154 is arranged to determine a fault when the reflection coefficient falls below a threshold value.

To increase accuracy, averaging of multiple measurements may be used. Averaging may be used in different manners. For example, the multiple electric signals may be averaged. However, it appears a better approach is to average the reflection coefficients themselves.
In an embodiment, the fault determination unit is arranged to average multiple reflection coefficients. It was found that this produced more accurate results than averaging the direct and reflected amplitudes. In particular, variation in the multiple reflection coefficients is lower, due to internal calibration, than the variation in the electric signal.

For example, generating a direct wave may be generated and detected multiple repetitions, with summation of direct and reflected amplitudes over several time traces. The fault determination unit may store multiple reflection coefficients corresponding to the multiple repetitions in a reflection coefficient memory 157 of the fault determination unit. The multiple reflection coefficients may be average to increase accuracy.

In an embodiment, the reflection coefficient unit 153 is arranged to compute an affine function *f*(,) taking as two inputs the amplitude of the reflected wave and the amplitude of the direct wave. The amplitudes may be taken in the time domain and/or in the frequency domain. In particular, the reflection coefficient unit 153 may be arranged to compute the reflection coefficient by dividing the amplitude of the reflected wave of some reflection feature by the amplitude of the direct wave; below we will assume that the reflection coefficient is computed in this manner. In the latter case, the value of the reflection coefficient reduces with increased wear.

Typically, the apparatus 150, and possibly its individual units, comprise a microprocessor (not shown) which executes appropriate software stored at the apparatus; for example, that software may have been downloaded and/or stored in a corresponding memory, e.g., a volatile memory such as RAM or a non-volatile memory such as Flash (not shown). Alternatively, they may, in whole or in part, be implemented in programmable logic, e.g., as field-programmable gate array (FPGA); or implemented, in whole or in part, as a so-called application-specific integrated circuit (ASIC), i.e. an integrated circuit (IC) customized for their particular use.

Below, various embodiments of the amplitude determination unit 152, the reflection coefficient unit 153 and the fault determination unit 154 are discussed.

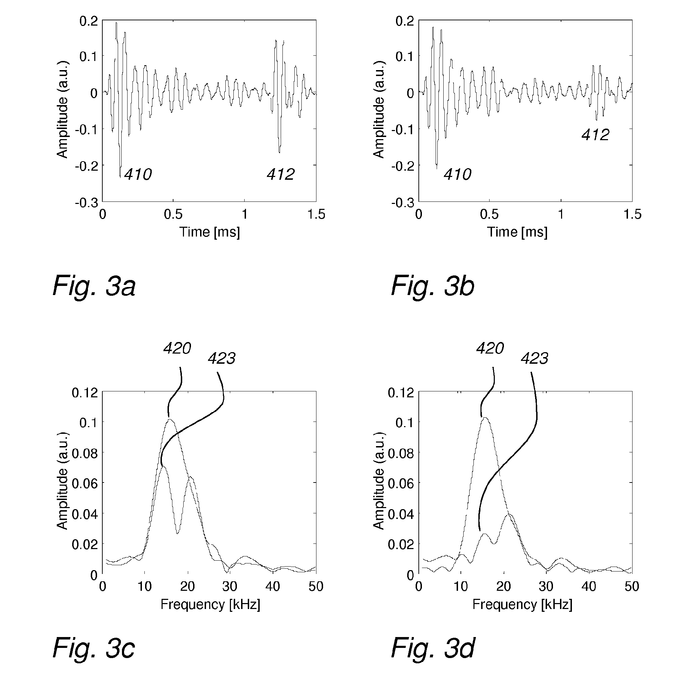

Figures 3a-3f show experimental results for one particular experimental set-up.

The experiment uses two similar dry coupled transducers clamped to the pipe at a near end and at some distance thereof, say like transducers 132 and 134. The emitting piezoelectric shear transducer produces tangential displacement, so that torsional and flexural modes are generated and the incident direction of propagation is towards a remote end, which functions as a torsional wave reflecting feature

The pipe is increasingly damaged by cutting an interior patch with axial extend of about half a wavelength of the torsional wave incrementally into the thickness of the internal wall. The patch has a fixed axial extent and varying depth and circumferential extent.

An arbitrary waveform generator is used to generate a single cycle 20 kHz sine tone with a burst period of 100 milliseconds. The amplified signal is fed into the emitting transducer, also referred to as source transducer (S). The received signal (R) is recorded over 5 ms by a digital oscilloscope with a sampling interval of 504 ns to prevent aliasing. Typically 16 or 128 successive recordings were captured and stacked for each measurement to improve the signal-to-noise ratio.

A frequency of 20 kHz is near the ring frequency (15 kHz) of the tested pipes and gives good signal strength. In studies of pipe wall transmission loss, a resonance like condition is associated with the ring frequency. This study considers an incident torsional T(0,1) mode in all cases and a resonance like performance occurs when, for the torsional wave, a single wavelength is equal to the nominal circumference of the pipe wall. Mathematically, the corresponding ring frequency of the torsional wave is given as *f*_{ring T(0,1)} = *v_{S}*/π (*rₒ* + *rᵢ*), where (*rₒ* + *rᵢ*) is the mean diameter of the pipe and *vₛ* = √(*G*/*ρ*) is the shear wave velocity of carbon steel with density *ρ, r*ₒ is the outer radius, *rᵢ* is the inner radius.

Young's modulus, *E,* and shear modulus, *G,* are calculated from the extensional and shear wave velocity and density in a separate experiment; these are *E* = 210 GPa and *G* = 81 GPa, respectively. The table below summarizes the pipe dimensions and associated ring frequency; SDR is the standard dimension ratio: outer diameter over wall thickness.

| 2*rₒ* | (*rₒ*-*rᵢ*) | SDR | *f*_{ring T(0,1)} |
|---|---|---|---|
| mm | mm | - | kHz |
| 45 | 1.5 | 30 | 24 |
| 50 | 2.0 | 25 | 22 |
| 75 | 2.5 | 30 | 15 |
| 80 | 2.0 | 40 | 13 |

A typical time record from an experiment on a 75 mm pipe at the initial undamaged state is shown in figure 3a. The pipe has a ring frequency at 15 kHz. The time record clearly shows the direct wave arrival at early times (at 410) and the reflected signal from the reflecting feature at 1.20 ms with lower amplitude (at 412).

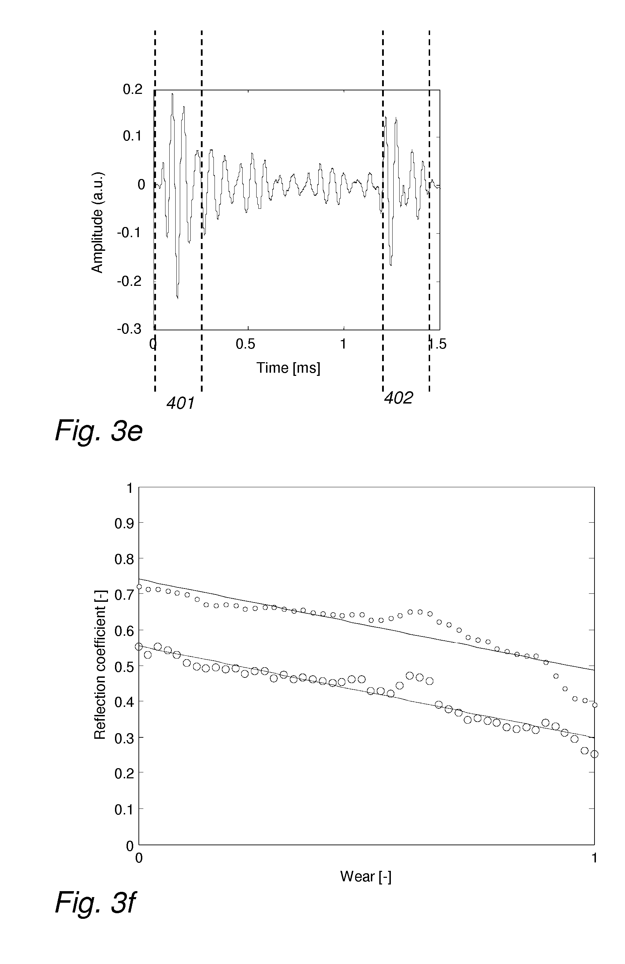

The direct wave is windowed from 0 to 0.25 ms, cosine tapered and transformed to the frequency domain. The reflected arrival is windowed from 1.20 to 1.45 ms and processed alike. Windows for figure 3a are illustrated in figure 3e. The direct window has been indicated with dashed lines at 401; the reflected window has been indicated with dashed lines at 402.

Figure 3c shows the corresponding amplitude spectra after Fourier Transforming both time windows. The curve 420 and curve 423 in the amplitude spectra correspond to the direct and reflected wave, respectively. The amplitude spectrum of the incident wave arrival has a single peak at 15 kHz in accordance with the associated ring frequency, at 420. The amplitude spectrum of the reflected arrival has a peak at 15 kHz, at 423, and also shows a peak close to 20 kHz, associated with the excitation frequency. Closer examination of the reflected time window indeed shows two distinct arrivals, separated at 1.3 ms.

The related time record and amplitude spectrum of the same pipe with a cut-through patch extended around one-eighth of the circumference is shown in figures 3b and 3d. The reflected amplitude of the damaged pipe is clearly lower than the reflected amplitude of the undamaged pipe due to scattering of wave energy at the defect. The decrease is about a factor two in the time domain and in the frequency domain at the torsional ring frequency of 15 kHz.

The amplitude of the 20 kHz arrival (from 1.3 to 1.5 ms in time) decreases less abruptly. The excitation amplitude and the excitation frequency of the source are chosen, while the amplitude of the ring frequency depends on the resonance behavior of the damaged pipe. The ring frequency is dependent on the wave type. The amplitude at the ring frequency is generally close to the absolute maximum amplitude; the difference may be minimized by convolution with the source spectrum.

All intermediate measurements between the undamaged state and cut-through patch state are converted to a reflection coefficient, defined as the amplitude of the reflected signal divided by the amplitude of the incident signal of the same recording. Internal comparison reduces experimental errors, such as loosening of the sensor during the course of the experiment, e.g., from vibrations of the cutting tool.

The reflection coefficient results for the part-circumferential patch as a function of wear is shown in figure 3f. The decrease in reflection coefficient with increasing damage depth is modest at small depths and drops roughly linearly as the depth is increased. The reflection coefficients of the experimental data, are shown both in the time domain (dots) and in the frequency domain at the torsional ring frequency of 15 kHz (open circles). Both linear fits have a slope of -0.25. Zero wear is an undamaged pipe; a wear value of 1 represents a patch through the wall.

The measurement of the amplitudes of the incident and reflected signal is made by scanning the peak-to-peak value in the time window, e.g., the change between peak (highest amplitude value) and trough (lowest amplitude value). The amplitudes in the frequency domain are measured from the spectral amplitude at the torsional ring frequency of the associated arrivals.

The identical slope of the linear fits indicate no significant difference between the variation of the reflection coefficients for these two approaches and confirms that the signals are narrowband around the torsional ring frequency. The intercept of the time fit is *R_{f}* = 0.75; the intercept of the frequency fit depends on the chosen frequency.

Returning to figure 1. In an embodiment, the amplitude determination unit is arranged to window the direct wave in the electric signal obtaining a direct window, e.g., direct window 401 in figure 3e, and to determine the amplitude of the direct wave from the direct window, and the amplitude determination unit is arranged to window the reflected wave in the electric signal obtaining a reflected window, e.g., reflected wave window 402 in figure 3e, and to determine the amplitude of the reflected wave from the reflected window.

One way of doing this is as follows. First an envelope of the signal is determined. In physics and engineering, the envelope function of a rapidly varying signal is a smooth curve outlining its extremes in amplitude. In the envelope a first peak is determined, having a first maximum value. Next an interval surrounding the first peak is selected wherein the signal has a value of at least the first maximum value times a first constant. The interval is preferably at least one period. The constant is less than 1, and may, e.g., be taken as 0.5. Finally the size of the interval is increased, e.g., by multiplying the interval with a second constant, of say between 1 and 3. The first peak may be taken as the center of the multiplication so that the multiplied interval surrounds the first peak. The reflected window may be determined in the same manner, but taking the second peak instead of the first peak.

In an embodiment, the amplitude determination unit is arranged to transform the direct and/or reflected window to the frequency domain. The amplitude of the direct wave may be determined at the torsional ring frequency. Signal processing steps to improve the signal properties in the frequency domain, such as applying a taper, e.g., a cosine taper, may optionally be applied before applying a frequency transform. The frequency transform may be a Fourier transform or another frequency transform. For example, fault detection system 100, say in apparatus 150, may comprise a frequency domain transformer 156 for converting a signal from a time domain to a frequency domain.

It is found that the system can detect and/or locate a pipe fault at relatively large distances from the generating and/or receiving transducer. For example, in an embodiment, a distance between the receiving transducer and the reflecting feature is at least ten wavelengths of the torsional wave at the excitation frequency. In an embodiment, the distance is 2 meter. This allows to use relatively few transducers in a longer pipe. For example, in an embodiment, the pipe has at most a single emitting transducer and a single receiving transducer per ten wavelengths or more of pipe in the axial direction of the pipe, because of ring frequency effects.

In an embodiment, the fault determination unit is arranged to estimate an extent of the fault from a difference in the reflection coefficient. For example, a difference may be computed between a neutral value, say a value representing a reflection coefficient of an undamaged pipe and a measured reflection coefficient at some stage of wear. Considering figure 3f, reflection coefficient decreases as wear increases, so that the difference between the value at wear =0 and a measured reflection coefficient increases as wear increases.

It appears that wave scattering at the defect causes the reflection coefficient from the reflection at the reflecting feature to decrease roughly linear with increasing depth of the damage. Scattering increases with defect depth. Also, finite element predictions show that the reflection coefficient from a defect, in particular of the T(0,1) mode, increases with defect depth.

In an embodiment, the pipe fault detection system 100, e.g., in apparatus 150, comprises a fault localization unit 155 and is arranged to determine a location of fault 116 in pipe 110.

For example, fault localization unit 155 may determine a further reflection in the electric signal of the transmitted wave which is caused by the fault itself. Then a time difference may be determined between the arrival of the further reflection at the receiving transducer and the arrival of the direct wave at the receiving transducer. From the time difference a location of the fault in the pipe may be determined, e.g., using the constant velocity of the torsional wave.

Alternatively, the time difference between the arrival of the further reflection at the receiving transducer and the emitting incident wave may be used.

To clarify, one may imagine the time records to be divided into three parts: direct wave arrival, arrival of the reflected wave off a fault, and arrival of the reflected wave from a reflecting feature. The corresponding reflection coefficient-wear figures then show: R = 1 (zero slope), dR/dw > 0 (positive slope), dR/dw < 0 (negative slope); here R is a variable reflection coefficient and d/dw is a differential operator for taking the first derivative with respect to variable wear w.

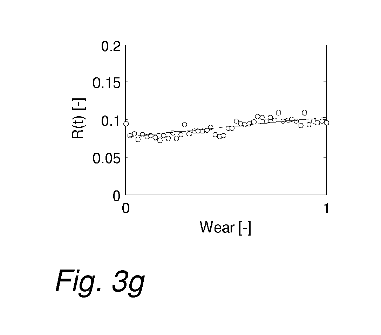

Figure 3g plots the reflection coefficient from the fault as a function of wear for the 75 mm pipe. The reflection coefficient from the fault may be computed similarly as the reflection coefficient from the reflecting feature, e.g., as the amplitude of the signal reflected by the fault divided by the amplitude of the direct wave.

This clearly demonstrates that the reflection coefficient from a fault increases roughly linear with increasing wear. From the inverse relationship the further reflection in the electric signal may be determined, e.g. by scanning the signal and locating an increase in reflection coefficient. This specific time defines the arrival of the reflection off the fault.

In an embodiment, the waveform generator 133 is arranged to generate a wave having at least a frequency component of an excitation frequency. Preferably, the excitation frequency is close to the torsional ring frequency, say within plus or minus 35% thereof. Using an excitation frequency close to the torsional ring frequency causes the signal to carry further in the pipe, and allows an increase in the distance between receiving transducer and reflecting feature.

However, it is hard to precisely hit the torsional ring frequency, as the measured torsional ring frequency may differ from a calculated torsional ring frequency, at least to some extent.

In an embodiment, the a waveform is arranged to generate a wave having a range of frequencies that encompasses the torsional ring frequency of the pipe. For example, the range may include a number of frequencies, higher and/or lower, than the torsional ring frequency. Say the number may be 3, or more. In an embodiment, the range comprised the frequencies 10, 11, 12, 13, 14 and 15 kHz, for a ring frequency of 15 kHz. In a further example, the range may comprise one or more lower frequencies, and one or more higher frequencies, i.e. compared to the ring frequency; for example the range may be 13, 15 and 17 kHz. The range may be within plus or minus 35% of the torsional ring frequency, say as calculated on the basis of diameter, etc.

In an embodiment, the range is a so-called tophat range of frequencies that encompasses the ring frequency.

It is also possible to use a sweep of frequency through the range instead of producing a single wave comprising multiple frequencies. The single wave approach may be better analyzed for reflections.

The duration of the generated direct wave may be relatively short. This avoids overlap between the direct wave and reflected waves. For example, in an embodiment, the emitting transducer or waveform generator is arranged to generate a pulse-transmission having a burst period of say 100 milliseconds. For example, in an embodiment, the emitting transducer or waveform generator is arranged to generate between one to five cycles of the wave form. An embodiment uses single cycles.

In an embodiment, the pipe fault detection system 100 comprises a filter unit 158 arranged to filter the electric signal removing flexural and longitudinal wave modes from the electric signal. For example, the filter unit may obtain from the electric signal a torsional wave component.

For example, filter unit 158 extracts dispersion free components from the electrical signal. Extracting dispersion free modes from a signal, is known per se, e.g. from the field of geophysics where it is applied to, e.g., seismic data.

Guided wave properties in a pipe are more complicated, than the traditional bulk compressional (P) and shear (S) wave properties in a solid. A large number of wave modes are possible along the wall of a pipe. These different modes, commonly labeled *L*(*m,n*), *T*(*m,n*), and *F*(*m,n*), refer to longitudinal, torsional, and flexural modes, respectively. The first index, *m,* gives the harmonic number of circumferential variation and the second index, *n,* is a counter variable. Zero-order modes have axially symmetric displacements and stresses around the circumference. First-order modes have one sine wave of variation around the circumference, etc.

Most waves are dispersive so that the original wave packet is distorted as it travels through the given structure. The phase velocity relates the frequency of the modes to the speeds of single tones, whereas the group velocity gives the speed at which wave packets travel.

A source can generally excite all the modes which exist within its frequency bandwidth, resulting in a signal which is more difficult to interpret. At one specific frequency, all three wave types may have at least one wave mode, all with a different phase velocity. Many different wave types and wave modes have the same specific phase velocity, so with a fixed source-receiver offset they arrive at the same time as a superposition of multi-frequency waves. Selection of the desired wave relies on the excitation and reception of a single mode in a narrow nondispersive region in order to reduce the difficulty of dealing with many dispersive modes. In principle both axisymmetric and nonaxisymmetric modes can be used for long range inspection. Axisymmetric modes are in general preferable because they can be detected at a single circumferential location due to their relatively simple acoustic field.

The shape of the T(0,1) mode is a tangential displacement through the thickness of the pipe wall. No axial or radial displacements are present in this mode. The tangential displacements are approximately constant through the wall thickness, making it equally sensitive to internal or external defects at any circumferential location. This indicates that defects will be detectable anywhere in the cross section of the pipe.

Mode conversion of axisymmetric modes to nonsymmetric modes occurs at nonaxisymmetric features, such as a part-circumferential patch. When an axisymmetric mode is incident at an axisymmetric reflector, such as a circumferential weld or pipe end, only the axisymmetric propagating modes existing at the frequency of interest will contribute to the reflected field.

In an embodiment, the direct wave is below the T(0,2) cutoff frequency. This has the advantage that there is no mode conversion at the end of the pipe and T(0,1) is simply reflected. No other torsional mode is present; higher order torsional modes have a cut-off frequency outside the frequency range used.

In an embodiment, the direct wave has a T(0,1) mode component, and the filter unit is arranged to extract the T(0,1) mode from the electric signal. The shape of the torsional T(0,1) mode is not frequency dependent and its speed is nondispersive at all frequencies; the signal shape is retained as it travels and its velocity is the bulk shear velocity.

For cylindrical structures, the zero order modes are those which are axially symmetric, that is, the displacement and stress is identical for all locations around the circumference of the pipe.

In an embodiment, fault detection is conducted using two shear sensors, so nonsymmetrical modes are also generated.

Phase velocities of all wave modes are found from accumulations of the absolute value of the complex amplitude (e.g. the norm) in the frequency-velocity space. In this imaging process, a multichannel record in the time-space domain is transformed into the frequency-phase velocity domain using the phase-shift method. (See C.B. Park, R.D. Miller, and J. Xia, 1999, Multichannel analysis of surface waves, Geophysics 64, 800-808)

A normalized multi-channel time record is first decomposed in individual frequency components by Fourier Transformation. For a range of phase velocities, the phase difference for a frequency is calculated to compensate for the time delay corresponding to a specific offset and stacked to make a summed norm of the amplitude. This is repeated for the different frequency components. Display of all summed norms in the frequency-velocity space shows a pattern of amplitude accumulations representing the dispersion curves.

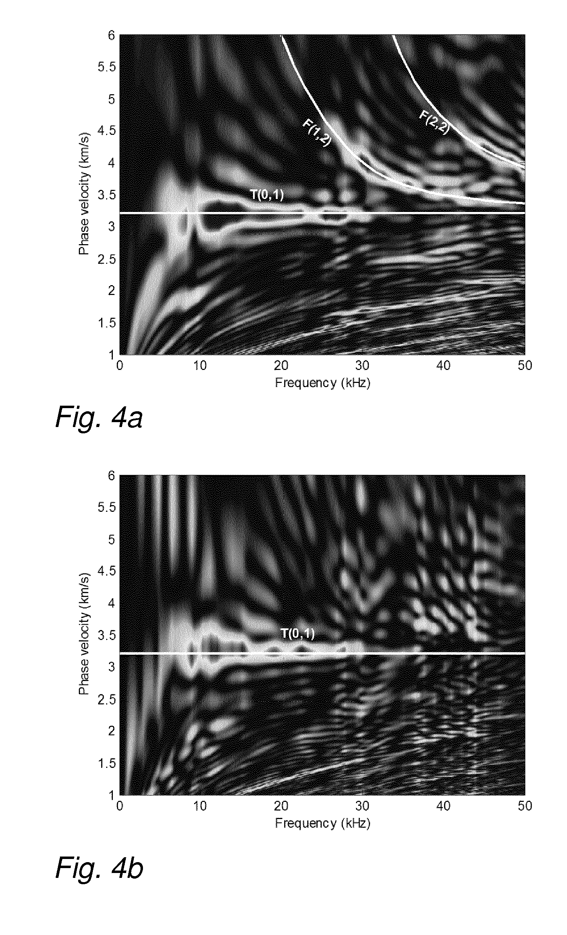

The phase velocity dispersion images of the direct and reflected arrival are shown in figures 4a and 4b. Figure 4a shows that direct wave and Figure 4b a reflected wave from an axisymmetric pipe end. The theoretical dispersion curves are overlaid for reference.

This multi-channel approach does not attempt to calculate individual phase velocity curves, but constructs an image space where dispersion trends are identified from the pattern of amplitude accumulation in the frequency-velocity space.

Pipe ends and welds are axially symmetric, so the energy which they reflect is predominantly in the T(0,1) mode. Multi-mode dispersion imaging confirms that the fundamental torsional wave is reflected at a pipe end and that the incident flexural wave modes F(1,2) and F(2,2) are suppressed. Reception of a single mode improves the relationship between the extent of wear and the reflection coefficient.

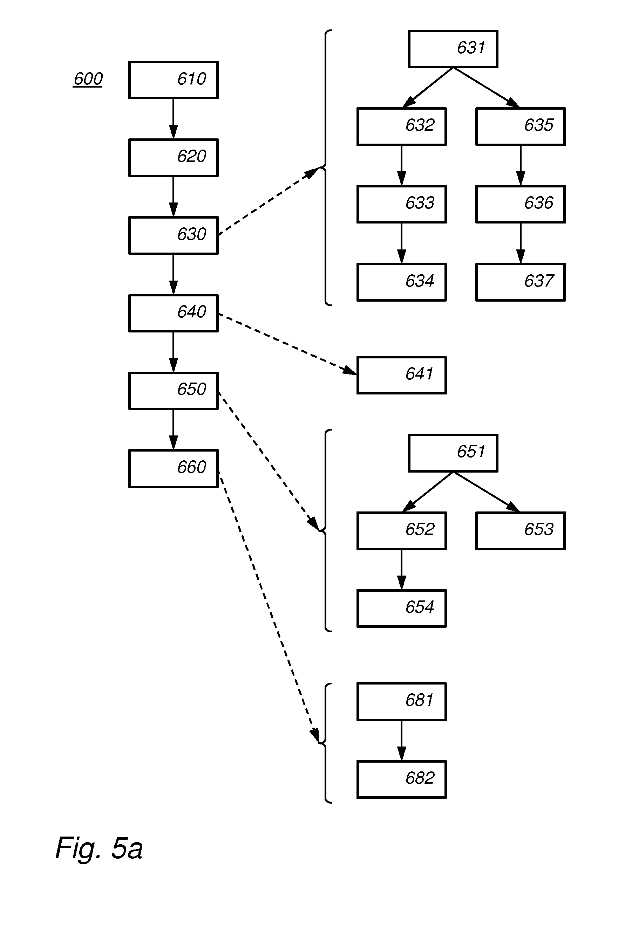

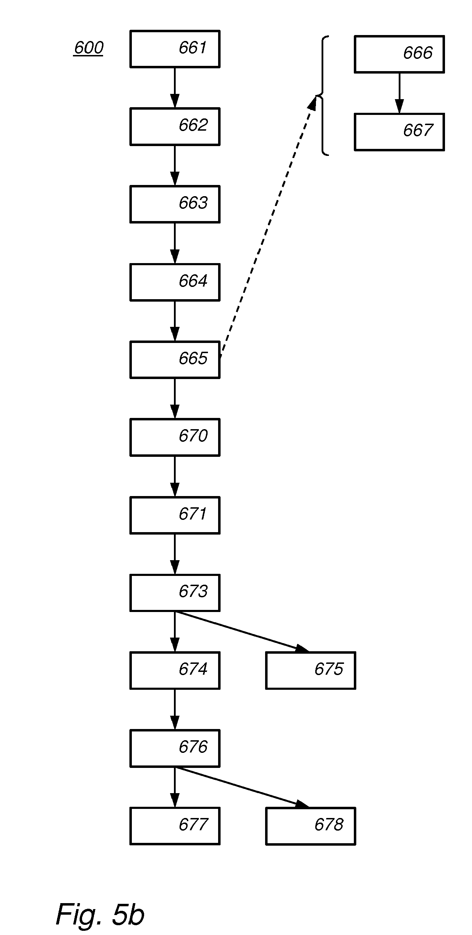

Figure 5 schematically shows an example of a method 600 for detecting a fault in a pipe, such as pipe 110. The pipe comprises a torsional wave reflecting feature, e.g. as explained with respect to figure 1.

Method 600 comprises:
Generating 610 an incident wave in the wall of the pipe propagating along the wall towards the receiving transducer, the incident wave having at least a torsional component, Transducing 620 at least received torsional waves into an electric signal, the electric signal representing the direct wave arriving directly from the emitting transducer and a reflected wave, the reflected wave being obtained from the transmitted wave reflected off the reflecting feature,
Determining 630 an amplitude of the reflected wave in the electric signal and an amplitude of the direct wave in the electric signal,

The determining 630 may comprise:
Filtering 631 the electric signal removing flexural and longitudinal wave modes from the electric signal.
Window 632 the direct wave in the electric signal obtaining a direct window, and to determine the amplitude of the direct wave from the direct window in the time domain,
Transform 633 the direct window to the frequency domain, Determine 634 the amplitude of the direct wave from the frequency spectrum in the frequency domain.
Window 635 the reflected wave in the electric signal obtaining a reflected window, and to determine the amplitude of the reflected wave from the reflected window in the time domain.
Transform 636 the reflected window to the frequency domain, Determine 637 the amplitude of the reflected wave from the frequency spectrum in the frequency domain.
In practical embodiments is not necessary to compute the reflection coefficient both in the time domain and in the frequency domain.
Computing 640 a reflection coefficient from the amplitude of the reflected wave and the amplitude of the direct wave. The computing 640 may comprise: Dividing 641 the amplitude of the reflected wave by the amplitude of the direct wave.
Determining 650 a fault when the reflection coefficient crosses a threshold value.

Determining 650 may comprise:
Compare 651 the reflection coefficient with a threshold value: if the reflection coefficient crosses the threshold value, continue at 652; if not continue at 653. In case 652 a fault may be signaled. In case 653 no-fault may be signaled. Estimating 654 (optional) an extent of the fault from a difference between a neutral value, say the value of the reflection coefficient when the pipe is undamaged, and the reflection coefficient.

Localize 660 (optional) a fault in the pipe. Localizing 660 may comprise:
Determine 681 a further reflection in the electric signal of the transmitted wave reflected off the fault, and
Determine 682 a time difference between the arrival of the further reflection at the receiving transducer and the arrival of the direct wave at the receiving transducer, or between the arrival of the further reflection at the receiving transducer and the emitting of the incident wave, determine an axial location of the fault in the pipe from the time difference and the torsional wave velocity.

Determining the further reflection may be done as follows.

Scan 661 the electric signal by a running window. The running window may have the same length as the length of the direct window. The running window may overlap a previous window while scanning.

Determine 662 the amplitude of the signal in the running windows in the time domain. The amplitude may be determined by its envelope and or peak-to-through extremes, etc.

Transform 663 the running window to the frequency domain.

Determine 664 the amplitude of the signal in the frequency domain from the frequency spectrum.

Computing 665 a reflection coefficient from the amplitude of the signal in the running windows and the amplitude of the direct wave.

The computing 665 may comprise: Dividing 666 the amplitude of the signal in the running windows 662 by the amplitude of the direct wave 632. Dividing 667 the amplitudes of the signal in the frequency domain 664 by the amplitude of the direct wave 634.

Compute 670 for the running windows the derivative of the reflection coefficient.

Determine 671 for each window if the derivative is zero, positive or negative.

Compare 673 the derivative with threshold values, if the derivative crosses the threshold value, continue at 674; if not continue at 675. In case 674 a reflection may be signaled; continue at 676. In case 675 no-reflection may be signaled.

Determine 676 the sign of the derivative, if the derivative is negative, continue at 677; if the derivative is positive continue at 678. In case 677 a reflection may be from a fault 116, continue at 682. In case 678 the reflection may be from a reflecting feature 120.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

A method according to the invention may be executed using software, which comprises instructions for causing a processor system to perform method 600. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

Figure 6a shows a computer readable medium 1000 having a writable part 1010 comprising a computer program 1020, the computer program 1020 comprising instructions for causing a processor system to perform a method of fault detection, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of fault detection.

Figure 6b shows in a schematic representation of a processor system 1140 according to an embodiment. The processor system comprises one or more integrated circuits 1110. The architecture of the one or more integrated circuits 1110 is schematically shown in Figure 6b. Circuit 1110 comprises a processing unit 1120, e.g. a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of embodiments or to formulas of embodiments, thus increasing the intelligibility of the claim. These references shall not be construed as limiting the claim.

## Claims

1. A pipe fault detection system (100) for detecting a fault (116) in a pipe (110), the pipe comprising a torsional wave reflecting feature (120), the system comprising
- an emitting transducer (132) coupled to a wall (112) of the pipe, and a receiving transducer (134) coupled to the wall of the pipe,
- the emitting transducer being arranged to emit a incident wave (141) in the wall of the pipe, propagating along and through the thickness of the wall towards the receiving transducer, the incident wave having at least a torsional component,
- the receiving transducer being arranged to transduce at least torsional waves received in the receiving transducer into an electric signal (135), the electric signal representing a direct wave and a reflected wave, the direct wave being a portion of the incident wave arriving at the receiving transducer, the direct wave arriving directly from the emitting transducer and the reflected wave being obtained from a transmitted wave reflected off the reflecting feature, the transmitted wave being a portion of the incident wave transmitted beyond the receiving transducer,
- an amplitude determination unit (152) arranged to determine an amplitude of the reflected wave in the electric signal and an amplitude of the direct wave in the electric signal,
- a reflection coefficient unit (153) arranged to compute a reflection coefficient from the amplitude of the reflected wave and the amplitude of the direct wave, and
- a fault determination unit (154) arranged to determine a fault when the reflection coefficient crosses a threshold value.

2. A pipe fault detection system as in Claim 1, wherein computing the reflection coefficient comprises dividing the amplitude of the reflected wave by the amplitude of the direct wave.

3. A pipe fault detection system as in any one of the preceding claims, wherein the reflecting feature is located at the pipe wall on a remote side of the fault, and wherein the generating and receiving transducer are located on a near side of the fault, the near side being opposite the remote side in the axial direction.

4. A pipe fault detection system as in any one of the preceding claims, wherein the emitting transducer and/or the receiving transducer are shear transducers, arranged to generate and/or receive a torsional displacement in the wall of the pipe.

5. A pipe fault detection system as in any one of the preceding claims, wherein the fault determination unit is arranged to estimate an extent of the fault from a difference between a neutral value and the reflection coefficient.

6. A pipe fault detection system as in any one of the preceding claims, comprising- a fault localization unit (155) arranged to
- determine a further reflection in the electric signal, the further reflection representing the transmitted wave reflected off the fault,
- determine a time difference between the arrival of the further reflection at the receiving transducer and the arrival of the direct wave at the receiving transducer, or between the arrival of the further reflection at the receiving transducer and the emitting of the incident wave,
- determine an axial location of the fault in the pipe from the time difference and the torsional wave velocity.

7. A pipe fault detection system as in any one of the preceding claims, comprising a waveform generator (133) coupled to the emitting transducer, the waveform generator being arranged to generate a wave having a range of frequencies encompassing the torsional ring frequency of the pipe.

8. A pipe fault detection system as in any one of the preceding claims, wherein
- the amplitude determination unit is arranged to window the direct wave in the electric signal obtaining a direct window (401), and to determine the amplitude of the direct wave from the direct window,
- the amplitude determination unit is arranged to window the reflected wave in the electric signal obtaining a reflected window (402), and to determine the amplitude of the reflected wave from the reflected window.

9. A pipe fault detection system as in Claim 8, wherein
- the amplitude determination unit is arranged to transform the direct window to the frequency domain,
- the amplitude determination unit is arranged to transform the reflected window to the frequency domain.

10. A pipe fault detection system as in any one of the preceding claims, wherein the fault determination unit is arranged to average multiple reflection coefficients.

11. A pipe fault detection system as in any one of the preceding claims, comprising a filter unit (158) arranged to filter the electric signal removing flexural and longitudinal wave modes from the electric signal.

12. An electronic pipe fault detection apparatus (150) for detecting a fault in a pipe, the pipe comprising an axially symmetric torsional wave reflecting feature, an emitting transducer being coupled to a wall of the pipe, and a receiving transducer coupled to the wall of the pipe, the emitting transducer being arranged to emit a incident wave (141) in the wall of the pipe, propagating along and through the thickness of the wall towards the receiving transducer, the incident wave having at least a torsional component, the receiving transducer being arranged to transduce torsional waves received in the receiving transducer into an electric signal, the electric signal representing a direct wave and a reflected wave, the direct wave being a portion of the incident wave arriving at the receiving transducer, the direct wave arriving directly from the emitting transducer and the reflected wave being obtained from a transmitted wave reflected off the reflecting feature, the transmitted wave being a portion of the incident wave transmitted beyond the receiving transducer, the electronic pipe fault detection apparatus comprising
- an interface (151) arranged to receive the electric signal,
- an amplitude determination unit arranged to determine an amplitude of the reflected wave in the electric signal and an amplitude of the direct wave in the electric signal,
- a reflection coefficient unit arranged to compute a reflection coefficient from the amplitude of the reflected wave and the amplitude of the direct wave, and
- a fault determination unit arranged to determine a fault when the reflection coefficient crosses a threshold value.

13. A method (600) for detecting a fault in a pipe, the pipe comprising a torsional wave reflecting feature, the method comprising
- emitting (610) an incident wave in the wall of the pipe propagating along and through the wall towards the receiving transducer, the direct wave having at least a torsional component,
- transducing (620) at least received torsional waves into an electric signal, the electric signal representing a direct wave and a reflected wave, the direct wave being a portion of the incident wave arriving at the receiving transducer, the direct wave arriving directly from the emitting transducer and the reflected wave being obtained from a transmitted wave reflected off the reflecting feature, the transmitted wave being a portion of the incident wave transmitted beyond the receiving transducer,
- determining (630) an amplitude of the reflected wave in the electric signal and an amplitude of the direct wave in the electric signal,
- computing (640) a reflection coefficient from the amplitude of the reflected wave and the amplitude of the direct wave, and
- determining (650) a fault when the reflection coefficient crosses a threshold value.

14. A computer program comprising instructions executable by a programmable apparatus, said instructions comprising
- one or more instructions arranged to receive an electric signal,
- one or more instructions arranged to determine an amplitude of the reflected wave in the electric signal and an amplitude of the direct wave in the electric signal,
- one or more instructions arranged to compute a reflection coefficient from the amplitude of the reflected wave and the amplitude of the direct wave, and
- one or more instructions arranged to determine a fault when the reflection coefficient crosses a threshold value.

15. A non-transitory tangible computer readable storage medium (1000) comprising data (1020) loadable in a programmable apparatus, the data representing instructions executable by the programmable apparatus, said instructions comprising
- one or more instructions arranged to receive a electric signal,
- one or more instructions arranged to determine an amplitude of the reflected wave in the electric signal and an amplitude of the direct wave in the electric signal,
- one or more instructions arranged to compute a reflection coefficient from the amplitude of the reflected wave and the amplitude of the direct wave, and
- one or more instructions arranged to determine a fault when the reflection coefficient crosses a threshold value.
